Europäisches Patentamt

European Patent Office

Office européen des brevets

(11) Veröffentlichungsnummer: **0 166 980 B1**

(12) **EUROPÄISCHE PATENTSCHRIFT**

(45) Veröffentlichungstag der Patentschrift: 02.10.91

(51) Int. Cl.5: **C25B 3/10, H01M 4/60, H01B 1/12, C08G 73/06**

(21) Anmeldenummer: 85106800.7

(22) Anmeldetag: 03.06.85

(54) Verfahren zur Herstellung von elektrisch leitfähigen Homo- und Copolymerisaten von Pyrrolen sowie deren Verwendung.

(30) Priorität: 05.06.84 DE 3420854

(43) Veröffentlichungstag der Anmeldung:
08.01.86 Patentblatt 86/02

(45) Bekanntmachung des Hinweises auf die
Patenterteilung:
02.10.91 Patentblatt 91/40

(84) Benannte Vertragsstaaten:
BE DE FR GB NL

(56) Entgegenhaltungen:

JOURNAL OF THE CHEMICAL SOCIETY, CHE-
MICAL COMMUNICATIONS, 1979, Seiten
854-855, Letchworth, GB; K.K. KANAZAWA et
al.: ""Organic metals": polypyrrole, a stable
synthetic "metallic" polymer"

JOURNAL OF THE CHEMICAL SOCIETY, CHE-
MICAL COMMUNICATIONS, 1979, Seiten
635-636, Letchworth, GB; A.F. DIAZ et al.:
"Electrochemical polymerization of pyrrole"

(73) Patentinhaber: BASF Aktiengesellschaft
Carl-Bosch-Strasse 38
W-6700 Ludwigshafen(DE)

(72) Erfinder: Naarmann, Herbert, Dr.
Haardtblick 15
W-6719 Wattenheim(DE)
Erfinder: Koehler, Gernot, Dr. Dipl.-Ing.
Berner Weg 32
W-6700 Ludwigshafen(DE)
Erfinder: Hiller, Heinrich, Dr.
Theodor-Heuss-Strasse 11
W-6706 Wachenheim(DE)
Erfinder: Simak, Peter, Dr.
Philipp-Scheidemann-Strasse 17
W-6700 Ludwigshafen(DE)

## Beschreibung

Die Erfindung betrifft ein Verfahren zur Herstellung von elektrisch leitfähigen durch anodische Homo- und Copolymerisation der Pyrrole in Gegenwart von Leitsalzen. Die so erhaltenen erfindungsgemäßen Polymere sind - im allgemeinen filmförmige - Materialien, die eine hohe elektrische Leitfähigkeit, ein hohes mechanisches Niveau und vorteilhafte anwendungstechnische Eigenschaften besitzen.

Aus Arbeiten von A.F. Diaz et al, J.C.S. Chem. Comm. 1979, Seite 635; J.C.S. Chem. Comm. 1979, Seite 854; ACS Org. Coat, Plast. Chem. 43 (1980) wurde bekannt, daß durch anodische Polymerisation von Pyrrol in Gegenwart von Leitsalzen Filme mit elektrischen Leitfähigkeiten bis zu $10^2\Omega^{-1}cm^{-1}$ gebildet werden. Hierbei handelt es sich um p-leitende Polypyrrole, wobei als Gegenionen vor allem $BF_4{}^-$, $AsF_6{}^-$, $ClO_4{}^-$ und $HSO_4{}^-$ genannt werden. Die mechanischen Eigenschaften der so hergestellten Filme sind jedoch bei weitem noch nicht zufriedenstellend.

Gemäß der EP-A-0099984 können durch anodische Polymerisation von Pyrrolen zusammen mit anderen Heterocyclen, die ein konjugiertes π-Elektronensystem besitzen, leitfähige Polypyrrol-Copolymerisate hergestellt werden, die im Vergleich zu den vorbekannten elektrisch leitfähigen Polypyrrolen ein erheblich höheres mechanisches Niveau aufweisen. Nach einem anderen Vorschlag könen Verbindungen aus der Klasse der Pyrrole mit Aminogruppen enthaltenden Aromaten wie Anilin oder Phenylendiamin in Gegenwart von Leitsalzen copolymerisiert werden.

Doch auch diese Polypyrrol-Copolymerisate sind für spezielle Anwendungszwecke noch verbesserungsbedürftig.

Aufgabe der vorliegenden Erfindung ist es, ein neues weiteres Verfahren zur Herstellung von Polymeren aus der Klasse der Pyrrole zu schaffen, die gleichzeitig eine hohe elektrische Leitfähigkeit und ein hohes mechanisches Niveau besitzen und die gegenüber den bekannten elektrisch leitfähigen Polypyrrol-Systemen eine verbesserte Stabilität aufweisen.

Es wurde nun gefunden, daß diese Aufgabe durch ein Verfahren gelöst wird, bei dem man Verbindungen aus der Klasse der Pyrrole oder Mischungen von Verbindungen dieser Klasse mit anderen mit Pyrrolen copolymerisierbaren Verbindungen durch anodische Oxidation in polaren Elektrolytlösungsmitteln in Gegenwart von Leitsalzen unter Abscheiden des Polymeren an der Oberfläche der Elektrode polymerisiert.

Das Verfahren ist dadurch gekennzeichnet, daß man die Polymerisation in Gegenwart von Carbonylderivaten und von Säuren bei einer Stromdichte von 0,1 bis 20 m Amp/cm² durchführt.

Gegenstand der Erfindung sind des weiteren spezielle Ausgestaltungsformen des Verfahrens und die Verwendung der Polymerisate gemäß der nachfolgenden detaillierten Beschreibung.

Bei den durch das erfindungsgemäße Verfahren durch anodische Polymerisation hergestellten Polymeren handelt es sich um elektrisch hochleitfähige Systeme, die zumindest teilweise das Anion des bei ihrer Herstellung verwendeten Leitsalzes enthalten. Man kann die erfindungsgemäßen Polymere daher auch als Komplexe aus Kationen der Polymeren der Pyrrolen und Gegenanionen bezeichnen. Die Polymeren der Erfindung besitzen darüber hinaus ein hohes mechanische Niveau und ein insgesamt ausgewogenes und verbessertes Eigenschaftsbild, insbesondere auch sehr gute anwendungstechnische Eigenschaften, eine hervorragende Langzeitstabilität, was sie für den Einsatz in einem sehr breiten Anwendungsgebiet geeignet macht.

Unter Verbindungen aus der Klasse der Pyrrole werden im Rahmen dieser Erfindung das unsubstituierte Pyrrol selber als auch die substituierten Pyrrole, wie die N-Alkylpyrrole, N-Arylpyrrole, die an den C-Atomen monoalkyl- oder dialkylsubstituierten Pyrrole und die an den C-Atomen monohalogen- oder dihalogensubstituierten Pyrrole verstanden. Bei der Herstellung der erfindungsgemäßen Copolymeren können die Pyrrole allein oder in Mischung miteinander eingesetzt werden, so daß die Copolymere ein oder mehrere verschiedene Pyrrole eingebaut enthalten können. Vorzugsweise leiten sich die wiederkehrenden Pyrrol-Einheiten in den Copolymeren im wesentlichen von unsubstituiertem Pyrrol selber ab. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Zur Herstellung von Copolymerisaten der Verbindungen aus der Klasse der Pyrrole kommen solche Verbindungen in Frage, die durch anodische Oxidation von Gemischen von Pyrrol oder Pyrrolen mit diesen Verbindungen Copolymerisate ergeben, in deren Molekülen diese Verbindungen als Comonomer-Einheiten eingebaut sind. Geeignete Verbindungen, die unter den angegebenen Bedingungen mit Pyrrol oder Pyrrolen Copolymere ergeben, sind z.B. Heterocyclen mit einem konjugierten π-Elektronensystem. Dies sind heteroaromatische Verbindungen und werden im Rahmen dieser Erfindung der Einfachheit halber auch lediglich als "Heterocyclen" bezeichnet. Vorzugsweise handelt es sich bei diesen Heterocyclen um 5- oder 6-gliedrige Ringsysteme mit einem oder mehreren, vorzugsweise einem bis drei und insbesondere einem oder zwei Heteroatomen, die ggf., beispielsweise durch Alkylgruppen, am Heteroatom oder an den Ring-Kohlenstoffatomen substituiert sein können. Bei den Heterocyclen sollen dabei vorzugsweise, ebenso wie bei den Pyrrolen, mindestens zwei Ring-Kohlenstoffatome nicht substituiert sein, um die anodische Oxidation einfach und gut durchführen zu können. Beispiele für gut geeignete Heterocyclen sind Furan, Thiophen, Thiazol, Isoindol und Derivate, Oxazol, Thiadiazol, Imidazol, Pyridin, 3,5-Dimethylpyridin, Pyrazin, 3,5-Dimethylpyrazin. Besonders bewährt haben sich die 5-gliedrigen Heterocyclen, wie Furan, Thiophen, Thiazol und Thiadiazol. Die Heterocyclen können allein oder in Mischung miteinander zum Einsatz kommen.

Andere Comonomere für Pyrrole sind z.B. Aminogruppen enthaltende Aromaten, die ein konjugiertes $\pi$-Elektronensystem haben. Diese aromatischen Verbindungen werden im Rahmen dieser Erfindung der Einfachheit halber auch lediglich als "Aminoaromaten" bezeichnet. Vorzugsweise handelt es sich bei diesen Aminoaromaten um 6-gliedrige oder höher-kondensierte Ringsysteme mit einer oder mehreren, vorzugsweise einer bis drei Aminogruppen und gegebenenfalls einem oder zwei Heteroatomen, die ggf., beispielsweise durch Alkylgruppen, am Heteroatom oder an den Ring-Kohlenstoffatomen substituiert sein können. Bei den "Aminoaromaten" sollen dabei vorzugsweise, ebenso wie bei den Pyrrolen, mindestens zwei Ring-Kohlenstoffatome nicht substituiert sein, um die anodische Oxidation einfach und gut durchführen zu können. Beispiele für gut geeignete Comonomere sind: Anilin, subst. Anilin wie p-Phenacetin, p-Methoxyanilin, 2-Aminoanthracen, p-Phenylendiamin, o-Phenylendiamin, 2-Aminopyridin, Tetraaminobenzol, p-Phenoxyanilin oder m-Nitroanilin. Die Aminoaromaten können allein oder in Mischung miteinander zum Einsatz kommen.

Andere Comonomere sind z.B. Aminophenanthren, Benzidin, Semidin, Aminochrysen, Aminocarbazol.

Zur Herstellung von Pyrrol-Copolymeren können als Monomere auch stickstoffhaltige Acylsäurederivate, wie z.B. Acrylnitril, Vinylcarbazol oder Acrylamide, insbesondere Diacetonacrylamid, eingesetzt werden. Es hat sich nämlich gezeigt, daß diese Acrylsäure- oder Vinylcarbazol oder Vinylderivate unter den Bedingungen der anodischen Oxidation mit den Pyrrolen zu Copolymeren umgesetzt werden können.

Erfindungsgemäß enthalten die Copolymere neben den Einheiten aus Pyrrolen wiederkehrende Einheiten aus einem oder mehreren der genannten Comonomeren eingebaut. In den Copolymeren kann das Gewichtsverhältnis von den Einheiten aus Pyrrolen zu den Einheiten aus den Comonomeren in weiten Grenzen schwanken, z.B. von 1 : 99 bis 99 : 1. Vorzugsweise beträgt das Gewichtsverhältnis dieser Einheiten in den Copolymeren 20 : 80 bis 90 : 10.

Zur Herstellung der Homo- und Copolymeren der Verbindungen aus der Klasse der Pyrrole werden die Monomeren, das sind die Pyrrole und gegebenenfalls die Comonomeren, in einem polaren Elektrolytlösungsmittel in Gegenwart eines geeigneten Leitsalzes anodisch oxidiert und dabei polymerisiert. Die Gesamtmonomer-Konzentration an Monomeren beträgt hierbei im allgemeinen etwa 0,1 bis 1 Mol pro Liter Lösungsmittel. Da die anodische Polymerisation meist nur bis zu kleinen Umsätzen durchgeführt wird, kann diese Konzentration in weiten Grenzen unterschritten, aber auch überschritten werden.

Als Leitsalze dienen bevorzugt ionische oder ionisierbare Verbindungen mit Anionen starker, oxidierender Säuren oder auch von, gegebenenfalls mit Nitro-Gruppen substituierten Aromaten mit sauren Gruppen. Als Kationen für diese Leitsalze kommen neben den Erdalkalimetall-Kationen und $H^+$, insbesondere die Alkalimetall-Kationen, vorzugsweise $Li^+$, $Na^+$ oder $K^+$, in Betracht. Sehr günstig sind auch die $NO^+$- und $NO_2^+$-Kationen sowie insbesondere die Onium-Kationen, vor allem des Stickstoffs und des Phosphors, etwa des Typs $R^4N^+$ und $R^4P^+$, worin R Wasserstoff und/oder niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeutet. Unter den Ammonium- und Phosphonium-Kationen sind diejenigen besonders bevorzugt, in denen R Wasserstoff und/oder einen Alkylrest mit 1 bis 4 C-Atomen darstellt. Beispielhaft für bevorzugte Onium-Kationen seien neben dem $NH_4^+$-Ion insbesondere das Tetramethylammonium-, das Tetraethylammonium-, das Tetra-n-butylammonium-, das Triphenylphosphonium- und das Tri-n-butylphosphonium-Kation genannt.

Als Anionen für das Leitsalz haben sich $BF_4^-$ $AsF_4^-$, $R\text{-}SO_3^-$, $AsF_6^-$, $SbF_6^-$, $SbCl_6^-$, $ClO_4^-$, $HSO_4^-$ und $SO_4^{2-}$ als günstig erwiesen. Eine weitere Gruppe von Leitsalz-Anionen, die bei dem erfindungsgemäßen Verfahren mit besonderem Vorteil eingesetzt werden, leiten sich von Aromaten mit sauren Gruppen ab. Hierzu gehören das $C_6H_5COO^-$-Anion sowie insbesondere die Anionen von gegebenenfalls mit Alkylgruppen, mono-, di- oder mehrfach substituierten aromatischen Sulfonsäuren. In einer weiteren sehr günstigen Ausführungsform können die aromatischen Kerne der sauren Aromaten neben den sauren Gruppen auch noch andere Substituenten, insbesondere Nitro-Gruppen tragen. Zu den sauren Nitroaromaten zählen z.B. die Nitrophenole, die Nitrogruppen-substituierten aromatischen Carbonsäuren und die Nitrogruppen-substituierten aromatischen Sulfonsäuren. Insbesondere finden die Salze von Nitro-, Dinitro-, Trinitro-Benzoesäuren sowie Nitro-, Dinitro- und Trinitro-Benzolsulfonsäuren Einsatz. Auch sind die Salze von Nitroaromaten

3

mit mehreren sauren Gruppen, wie phenolischen Hydroxylgruppen, Carboxylgruppen und Sulfonsäuregruppen geeignet. Ferner können saure Aromaten mit Nitrosogruppen eingesetzt werden. Wegen der damit erzielbaren guten Ergebnisse sind Leitsalze mit dem Benzolsulfonsäure-Anion $C_6H_5SO_3^-$ oder Toluolsulfonsäure-Anion $CH_3-C_6H_4SO_3^-$ ganz besonders bevorzugt.

Die Leitsalzkonzentration beträgt in dem erfindungsgemäßen Verfahren im allgemeinen 0,001 bis 1, vorzugsweise 0,01 bis 0,1 Mol/Liter.

Das erfindungsgemäße Verfahren wird in polaren Elektrolytlösungsmitteln, die die Monomeren und das Leitsalz zu lösen vermögen, durchgeführt. Wenn mit Wasser mischbare organische Lösungsmittel Einsatz finden, kann zur Erhöhung der elektrischen Leitfähigkeit eine geringe Menge an Wasser, im allgemeinen bis zu 3 Gew.%, bezogen auf das organische Lösungsmittel, zugesetzt werden, auch wenn in der Regel in einem wasserfreien System und insbesondere auch ohne Zusatz von alkalisch machenden Verbindungen gearbeitet wird. Die Lösungsmittel selbst sind protisch oder aprotisch. Besonders eignen sich z.B. Aceton, Acetonitril, Dimethylformamid, Dimethylsulfoxid, Methylenchlorid oder N-Methylpyrrolidon.

Nach dem Verfahren zur Herstellung der elektrisch leitfähigen Homo- und Copolymerisate wird die Polymerisation der Verbindungen aus der Klasse des Pyrrols oder der Gemische mit anderen Copolymerisationsverbindungen zusätzlich in Gegenwart von Carbonylderivaten und von Säuren durchgeführt.

Von den Carbonylderivaten eignen sich z.B. aliphatische oder cyloaliphatische Ketone wie Aceton, Methylethylketon, Cyclohexanon und deren Homologe und Halogenderivate. Besonders geeignet sind Aldehyde von Heterocyclen im Pyrrolcarbonaldehyd bzw. Thiophencarbonaldehyd.

Es kommen auch Aldehyde wie aliphatische mit mindestens 2 C-Atomen, cycloaliphatische, heteroaromatische und aromatische Aldehyde in Frage. Geeignet sind z.B. Acetaldehyd, Acrolein, Propargylaldehyd, Cyclohexylcarboxaldehyd, Benzaldehyd, Nitrobenzaldehyd, N-Dimethylaminobenzaldehyd, Thiophenaldehyd oder Pyrrolaldehyd.

Es können auch verkappte Carbonylderivate wie Ketale, Acetale oder auch Isooxazol verwendet werden.

Die Carbonylderivate werden in solchen Mengen verwendet, daß 0,1 bis 1 Mol Carbonylderivat auf 1 Mol Pyrrol bzw. einer Verbindung aus der Klasse der Pyrrole bzw. auf 1 Mol des Gemisches auf eine Verbindung der Klasse der Pyrrole und einer anderen damit copolymerisierbaren Verbindung entfallen.

Außer den Carbonylderivaten sind bei der anodischen Oxidation der Pyrrole Säuren zugegen. Geeignet sind z.B. organische Säuren wie aliphatische Carbonsäuren z.B. Ameisen- oder Essigsäure. Sulfonsäuren wie Toluolsulfonsäure oder Trifluormethylsulfonsäure. Weiterhin eignen sich anorganische Säuren wie Borfluorwasserstoffsäure, Fluorwasserstoff, Chlorwasserstoffsäure, Schwefelsäure oder Phosphorsäure.

Die Säuren sind in Mengen von 0,1 bis 50 Gew.-%, vorzugsweise von 1 bis 25 Gew.-% in den Elektrolytlösungen enthalten.

Bei dem Verfahren zur Herstellung der Polymeren aus der Klasse der Pyrrole wird bevorzugt in einer einfachen, üblichen elektrolytischen Zelle oder Elektrolyse-Apparatur, bestehend aus einer Zelle ohne Diaphragma, 2 Elektroden und einer externen Stromquelle, gearbeitet. Die Elektroden können dabei beispielsweise am Nickel, Titan oder aus Graphit sein; auch Edelmetallelektroden, bevorzugt Platinelektroden, können verwendet werden. Dabei ist es günstig, wenn zumindest die Anode, insbesondere aber beide Elektroden, flächig ausgebildet sind. In einer besonderen Ausgestaltungsform des erfindungsgemäßen Verfahrens kann die Anode auch aus einem elektrisch leitfähigen Polymeren gebildet werden, wie z.B. aus durch anodische Oxidation hergestelltem Polypyrrol, dotiertem, p-leitendem Polyacetylen oder dotiertem, p-leitendem Polyphenylen. In diesem Fall werden die Pyrrole und die Aminoaromaten auf die im allgemeinen filmförmigen leitenden Polymeren aufpolymerisiert.

Je nach Verfahrensführung können unterschiedliche Typen von Homo- und Copolymeren erhalten werden. Setzt man z.B. Edelmetall-Elektroden und eine Mischung aus Pyrrolen und den Aminoaromaten ein, so erhält man ein filmförmiges Polymer, welches die Monomer-Einheiten in statistischer Verteilung eingebaut enthält. Die Pyrrole und die Comonomeren können aber auch stufenweise, d.h. nacheinander polymerisiert werden. So kann man beisielsweise zunächst nur die Pyrrole unter Abscheidung eines entsprechenden Polypyrrol-Films auf der Anode polymerisieren und anschließend durch anodische Oxidation des Comonomeren diese auf das zuvor erzeugte Polypyrrol aufpolymerisieren. Man erhält so "schichtförmig" aufgebaute Copolymere bzw. Copolymer-Filme mit hoher elektrischer Leitfähigkeit. Diese stufenweise Copolymerisation kann natürlich auch so vorgenommen werden, daß man zuerst die Comonomeren und dann die Pyrrole polymerisiert.

Außer der erwähnten einfachen elektrolytischen Zelle ohne Diaphragma können auch andere Elektrolyseeinrichtungen für das erfindungsgemäße Verfahren Einsatz finden, beispielsweise Zellen mit Diaphragma oder solche mit Referenzelektroden zur exakten Potentialbestimmung. Zur Kontrolle der Schichtstärke der abgeschiedenen Filme ist eine Messung der Strommenge (A/s) zweckmäßig.

Normalerweise führt man die Polymerisation bei Raumtemperatur und unter Inertgas durch. Da sich die Reaktionstemperatur bei der Polymerisation der Pyrrole als unkritisch erwiesen hat, kann die Temperatur jedoch in einem breiten Bereich variiert werden, solange die Erstarrungstemperatur bzw. Siedetemperatur des Elektrolyt-Lösungsmittels nicht unter- bzw. überschritten wird. Im allgemeinen hat sich eine Reaktionstemperatur im Bereich von 0 bis +50° C als sehr vorteilhaft erwiesen.

Als Stromquelle für den Betrieb der elektrolytischen Zelle, in der das erfindungsgemäße Verfahren durchgeführt eignet sich jede Gleichstromquelle, wie z.B. eine Batterie, die eine hinreichend hohe elektrische Spannung liefert. Zweckmäßigerweise liegt die Spannung im Bereich von etwa 1 bis 25 Volt; als besonders vorteilhaft haben sich Spannungen im Bereich von etwa 2 bis 12 Volt erwiesen. Die Stromdichte liegt üblicherweise im Bereich von 0,1 bis 20 mA/cm².

Die während der Elektrolyse anodisch abgeschiedenen erfindungsgemäßen Polymeren werden zur Entfernung von anhaftendem Leitsalz mit Lösungsmitteln gewaschen und bei Temperaturen von 30 bis 150° C, vorzugsweise unter Vakuum, getrocknet. Bei Einsatz von Graphit-, Edelmetall- oder ähnlichen Elektroden lassen sich danach die im allgemeinen filmförmig abgeschiedenen Copolymere leicht von der Elektrode ablösen, vor allem wenn Schichtstärken über 50 $\mu$m abgeschieden wurden. Werden als Anoden-Material leitfähige, filmförmige Polymere eingesetzt, so werden, wie erwähnt, die erfindungsgemäß eingesetzten Monomeren auf das polymere Elektrodenmaterial aufpolymerisiert, so daß man in diesem Fall ein Copolymer erhält, in dem das als Anode benutzte Polymere mit eingebaut ist.

Die erfindungsgemäßen Polymere zeigen hohe elektrische Leitfähigkeiten, im allgemeinen im Bereich von 10⁰ bis $10^2 \Omega^{-1}cm^{-1}$ und besitzen ein hohes mechanisches Niveau. Zur Messung der Reißkraft und Reißfestigkeit werden Filme aus den erfindungsgemäßen Copolymeren mit definierter Abmessung (Einspannlänge 25 mm, Meßlänge 10 mm, Breite 4 mm) gemäß DIN 53 504 auf einer INSTRON 1112-Maschine bis zum Bruch gestreckt. Die Filme erfahren hierbei nur eine unwesentliche Dehnung. Die elektrische Leitfähigkeit in $\Omega^{-1}cm^{-1}$ wird durch Kontaktierung der Filme mit Leitsilber und Messung nach der Zweipunktmethode bestimmt. Identische Ergebnisse erhält man durch Messung nach der Vierpunktmethode, wobei die Übergangswiderstände der Kontaktierung keine Rolle spielen können. Die Filme haben außerdem eine günstige Langzeitstabilität.

Die erfindungsgemäßen Polymeren haben sehr gute anwendungstechnische Eigenschaften und können zur Herstellung von Elektroden, Katalysatoren, elektrischen Speichersystemen, vorzugsweise als Elektroden für Sekundärbatterien, als Schalter, Halbleiter-Bauteilen, Abschirmmaterialien, Solarzellen und zur antistatischen Ausrüstung von Kunststoffen Einsatz finden. Vor allem führen sie dort zu einem technischen Fortschritt, wo ein hohes mechanisches Niveau der Bauteile bei geringem spezifischem Gewicht und insgesamt ausgewogenen Eigenschaften von Bedeutung ist.

Die Erfindung wird durch die nachfolgenden Beispiele näher erläutert. Die in den Beispielen angegebenen Teile und Prozente beziehen sich, sofern nicht anders vermerkt, auf das Gewicht.

## Beispiel 1

Es werden 6 Teile Pyrrol mit 500 Teilen Acetonitril, 10 Teilen konz. Essigsäure, 1,5 Teilen 2-Pyrrolcarboxaldehyd und 1 Teil Tetrabutylammoniumphenylsulfonsäure gemischt. Diese Reaktionslösung durchfließt eine Elektrolysezelle mit einer Umlaufgeschwindigkeit von 1 l/h. Die Zelle enthält Platin-Elektroden von 1 mm Dicke. Die Stromdichte beträgt 2 mA/cm² und ihre Polymerisationszeit beträgt 60 min. Es wird bei einer Temperatur von 25° C gearbeitet. Es bildet sich auf der Anode ein schwarzer Film aus, der eine Stärke von ungefähr 55 $\mu$m hat. Das Gewicht des Filmes beträgt 1,2 Teile.

Nach dem Waschen des Films mit Wasser für die Dauer von 1 Stunde wird der Film für die Dauer von 5 Stunden bei einer Temperatur von 50° C und einem Druck von 10⁻¹ Torr getrocknet. Die elektrische Leitfähigkeit des Films beträgt 30 S/cm.

Der Film kann mit mehrwertigen Metallionen chelatisiert werden. Zu diesem Zweck werden 1 cm² große Filmstücke in Metalllösungen, die 10% Metallsalze in wäßriger Lösung enthalten, gelagert. Bei Verwendung von Eisensulfat beträgt der Fe-Gehalt des Films 12%. Bei Verwendung von Kobaltnitratlösung 11,5 % Kobalt, bei der Verwendung von Chromsulfatlösung 14% Chrom und bei der Verwendung von Zinn-2-chloridlösung 5,2 % Zinn.

## Beispiel 2-11

Es wird wie in Beispiel 1 gearbeitet, jedoch anstelle von 2-Pyrrolcarboxaldehyd andere Carbonylkomponenten wie sie in der Tabelle angegeben sind, verwendet. Es werden die in der Tabelle zusammengefaßten Ergebnisse erhalten.

Tabelle 1

| Beispiel Nr. | Carbonyloleinat Art | Menge | Elektrische Leitfähigkeit S/cm |
|---|---|---|---|
| 2 | Isooxazol | 2 | 35 |
| 3 | p-Nitrobenzaldehyd | 3 | 40 |
| 4 | p-Dimethylaminobenzaldehyd | 3 | 30 |
| 5 | Acrolein | 2 | 25 |
| 6 | Benzaldehyd | 3 | 20 |
| 4 | Thiophen-2-aldehyd | 3 | 10 |
| 8 | Zimtaldehyd | 5 | 12 |
| 9 | Aceton | 3 | 20 |
| 10 | 1-Chlor-aceton | 4 | 16 |
| 11 | Propargylaldehyd | 3 | 5 |

Beispiel 12

Es wird wie in Beispiel 1 gearbeitet, jedoch werden andere Säuren als Essigsäure verwendet.

Tabelle 2

| Beispiel Nr. | Säure Art | Menge | Elektrische Leitfähigkeit S/cm |
|---|---|---|---|
| 12 | Ameisensäure | 10 | 20 |
| 13 | Propionsäure | 20 | 10 |
| 14 | Trifluormethansulfonsäure | 5 | 5 |

**Patentansprüche**

1. Verfahren zur Herstellung von elektrisch leitfähigen Homo- und Copolymerisaten des Pyrrols durch anodische Oxidation von Verbindungen aus der Klasse der Pyrrole oder von Mischungen von Verbindungen dieser Klasse mit anderen mit Pyrrolen copolymerisierbaren Verbindungen in polaren organischen Lösungsmitteln in Gegenwart von Leitsalzen, unter Abscheiden des Polymeren an der Oberfläche der Anode dadurch gekennzeichnet, daß man die Polymerisation in Gegenwart von Carbonylderivaten und von Säuren bei einer Stromdichte von 0,1 bis 20 m/cm² durchführt.

2. Verfahren nach Anspruch 1, dadurch gekennzeichnet, daß man die Carbonylderivate in Mengen von 0,1 bis 1 Molen bezogen auf 1 Mol der Verbindung aus der Klasse der Pyrrole oder der Mischungen mit anderen mit Pyrrolen copolymerisierbaren Verbindungen verwendet.

3. Verfahren nach Anspruch 1, dadurch gekennzeichnet, daß man die Säuren in Mengen von 0,1 bis 50 Gew.-% bezogen auf die Lösung aus Elektrolytlösungsmittel und Leitsalz verwendet.

4. Verwendung von Polymerisaten, hergestellt nach dem Verfahren nach Anspruch 1, als Elektroden für primäre und sekundäre Batterien.

5. Verwendung von Polymerisaten, hergestellt nach dem Verfahren nach Anspruch 1, als Leiter in der Elektrotechnik.

**Claims**

1. A process for the preparation of an electrically conductive homo- or copolymer of pyrrole by anodic oxidation of a compound from the class consisting of the pyrroles or of a mixture of compounds from this class with other compounds copolymerizable with pyrroles, in a polar organic solvent, in the presence of a conductive salt, with deposition of the polymer on the surface of the anode, wherein the polymerization is carried out in the presence of a carbonyl derivative and of an acid at a current density of from 0.1 to 20 mA/cm$^2$.

2. A process as claimed in claim 1, wherein the carbonyl derivative is used in an amount of from 0.1 to 1 mole per mole of the compound from the class consisting of the pyrroles or of the mixture with other compounds copolymerizable with pyrroles.

3. A process as claimed in claim 1, wherein the acid is used in an amount of from 0.1 to 50% by weight, based on the solution of the electrolyte solvent and conductive salt.

4. Use of a polymer prepared by a process as claimed in claim 1 as an electrode for primary and secondary batteries.

5. Use of a polymer prepared by a process as claimed in claim 1 as a conductor in the electrical industry.

**Revendications**

1. Procédé de préparation d'homo- et de copolymères du pyrrole électroconducteurs, par oxydation anodique de composés de la classe des pyrroles ou de mélanges de composés de cette classe avec d'autres composés copolymérisables avec les pyrroles, dans des solvants organiques polaires en présence de sels conducteurs, le polymère se déposant sur la surface de l'anode, caractérisé en ce qu'on conduit la polymérisation en présence de dérivés carbonylés et d'acides, avec une densité de courant de 0,1 à 20 mA/cm$^2$.

2. Procédé selon la revendication 1, caractérisé en ce qu'on utilise les dérivés carbonylés dans des proportions de 0,1 à 1 mole pour 1 mole du composé de la classe des pyrroles ou des mélanges avec d'autres composés copolymérisables avec les pyrroles.

3. Procédé selon la revendication 1, caractérisé en ce qu'on utilise les acides dans des proportions de 0,1 à 50% en poids par rapport à la solution du solvant d'électrolyse et du sel conducteur.

4. Utilisation de polymères, préparés par le procédé selon la revendication 1, comme électrodes pour des piles primaires et secondaires.

5. Utilisation de polymères, préparés par le procédé selon la revendication 1, comme conducteurs dans l'électrotechnique.